# EUROPÄISCHE PATENTSCHRIFT

(11) **EP 3 996 885 B1**
(45) Veröffentlichungstag und Bekanntmachung des Hinweises auf die Patenterteilung: **30.08.2023**
(21) Anmeldenummer: 20749807.2
(22) Anmeldetag: 07.07.2020
(51) Int. Cl.: B25J 13/08

(54) **VERFAHREN ZUR DETEKTION EINES DURCHRUTSCHENS BEIM GREIFEN EINES OBJEKTS MIT EINEM GREIFER**
METHOD FOR DETECTING SLIPPAGE WHEN GRIPPING AN OBJECT WITH A GRIPPER
PROCÉDÉ DE DÉTECTION D'UN GLISSEMENT LORS DU PINCEMENT D'UN OBJET AVEC UNE PINCE

(30) Priorität: 09.07.2019 DE 102019210090
(43) Veröffentlichungstag der Anmeldung: 18.05.2022
(73) Patentinhaber: Hochschule Karlsruhe Technik und Wirtschaft, 76133 Karlsruhe (DE)
(72) Erfinder: GINTNER, Klemens, 76275 Ettlingen (DE); BECK, Bernhard, 75210 Keltern (DE); WEBER, Michael, 76199 Karlsruhe (DE)
(74) Vertreter: Gagel, Roland
(86) Internationale Anmeldenummer: PCT/EP2020/069081
(87) Internationale Veröffentlichungsnummer: WO 2021/005037

(56) Entgegenhaltungen:
- EP-A1- 0 172 666
- CA-A1- 2 135 463
- HOWE R D ET AL: "SENSING SKIN ACCELERATION FOR SLIP AND TEXTURE PERCEPTION", PROCEEDINGS OF THE INTERNATIONAL CONFERENCE ON ROBOTICS AND AUTOMATION. SCOTTSDALE, MAY 15 - 19, 1989; [PROCEEDINGS OF THE INTERNATIONAL CONFERENCE ON ROBOTICS AND AUTOMATION], WASHINGTON, IEEE COMP. SOC. PRESS, US, Bd. VOL. 1, Nr. 1989, 15. Mai 1989 (1989-05-15), Seiten 145-150, XP000047439, DOI: 10.1109/ROBOT.1989.99981 ISBN: 978-0-8186-1938-0
- DARRYL P J COTTON ET AL: "A Novel Thick-Film Piezoelectric Slip Sensor for a Prosthetic Hand", IEEE SENSORS JOURNAL, IEEE SERVICE CENTER, NEW YORK, NY, US, Bd. 7, Nr. 5, 1. Mai 2007 (2007-05-01), Seiten 752-761, XP011176688, ISSN: 1530-437X, DOI: 10.1109/JSEN.2007.894912

## Beschreibung

### Technisches Anwendungsgebiet

Die vorliegende Erfindung betrifft ein Verfahren zur Detektion eines Durchrutschens beim Greifen eines Objekts mit einem Greifer, bei dem wenigstens ein Beschleunigungssensor an einer Greiffläche des Greifers eingesetzt wird, wenigstens ein Sensorsignal des Beschleunigungssensors während eines Greifprozesses erfasst und mit einem oder mehreren Frequenzfiltern gefiltert wird, um ein gefiltertes Sensorsignal in einem ersten Frequenzbereich zu erhalten, und das gefilterte Sensorsignal oder ein daraus abgeleiteter Wert mit einem ersten Schwellwert verglichen wird, dessen Überschreitung ein Indiz für ein Durchrutschen des Objekts darstellt.

In vielen Bereichen werden heutzutage Greifer eingesetzt, um Objekte greifen und kontrolliert bewegen zu können. Beispiele sind Handprothesen oder Roboter in der Automatisierungstechnik. Das Greifen der Objekte soll dabei möglichst zuverlässig erfolgen und ein Durchrutschen eines gegriffenen Objekts rechtzeitig erkannt werden.

### Stand der Technik

Zur Überwachung des Greifens eines Objekts mit einem Greifer sind unterschiedliche Techniken bekannt, bei denen ein Durchrutschen des Objekts mit einem oder mehreren Sensoren erkannt werden kann. Beispiele für derartige Techniken umfassen die Detektion einer Änderung der Wärmeübertragung an der Greiffläche oder die Messung von Kräften und/oder Schwingungen an der Greiffläche. So ist bspw. aus N.R. Tremblay et al., "Utilizing Sensed Incipient Slip Signals for Grasp Force Control", Symposium on Flexible Automation, 1992, San Francisco, Seiten 1 bis 7, der Einsatz eines Beschleunigungssensors bekannt, der an der Greiffläche des Greifers angeordnet wird. Der Beschleunigungssensor ist hierbei in der Spitze einer Schaumstoffkuppe eingebettet, die von einer texturierten künstlichen Haut überzogen ist. Mit dem Beschleunigungssensor werden die Vibrationen erfasst, die bei einem Durchrutschen eines gegriffenen Objekts an der Schaumstoffkuppe auftreten. Das Sensorsignal des Beschleunigungssensors wird dann zunächst verstärkt und mit einem Bandpass-Filter mit einem Durchlassbereich von 400 bis 700 Hz gefiltert. Das gefilterte Sensorsignal wird mit einem RMS-DC-Wandler gewandelt, um bei Überschreiten eines entsprechenden Schwellwerts ein Durchrutschen zur detektieren. Allerdings ist die Zuverlässigkeit der Detektion des Durchrutschens mit diesem Sensor noch unbefriedigend. Die gleichen Autoren haben daher bei einer Weiterentwicklung einen zweiten Beschleunigungssensor an einer Seite der Fingerkuppe integriert, um die Zuverlässigkeit der Detektion zu erhöhen (vgl. M.R. Tremblay et al., "Estimating Friction Using Incipient Slip Sensing During a Manipulation Task", Proc. 1993 IEEE Int. Conf. on Robotics & Automation, Seiten 429 bis 434).

Die EP 0 172 666 A1 offenbart ein Verfahren zur Detektion eines Durchrutschens beim Greifen eines Objekts mit einem Greifer, der wenigstens einen Beschleunigungssensor an einer Greifflache aufweist. Der Beschleunigungssensor ist in einen Grundkörper und der Grundkörper mit Hilfe eines elastischen Materials, das den Grundkörper seitlich stützt, schwingungsfähig so an der Greifflache des Greifers integriert, dass er bei einem Durchrutschen des Objekts nur in einer zur Greifflache parallelen Ebene in Schwingungen am Greifer versetzt werden kann. Während eines Greifprozesses wird ein Sensorsignal des Beschleunigungssensors erfasst, das mit dem Signal eines weiteren Beschleunigungssensor verglichen wird, der starr mit dem Greifer verbunden ist. Dadurch werden äußere Einflüsse vom Messsignal abgezogen und die Qualität der Messung erhöht.

Howe R. D. et al.: "Sensing Skin Acceleration for Slip and Texture Perception", PROCEEDINGS OF THE INTERNATIONAL CONFERENCE ON ROBOTICS AND AUTOMATION, IEEE COMP. SOC. PRESS, Vol. 1, 1989, Seiten 145-150, nutzen einen Beschleunigungssensor an einem flexiblen Körper zur Detektion des Durchrutschens, welcher an einen starren Grundkörper befestigt ist.

D. P. J. Cotton et al.: "A Novel Thick-Film Piezoelectric Slip Sensor for a Prosthetic Hand", IEEE SENSORS JOURNAL, Vol. 7, Nr. 5, 2007, Seiten 752-761, verwenden einen piezoelektrischen Sensor zur Detektion des Durchrutschens, der direkt auf die Fingerspitzenfläche der Greifhand aufgebracht ist. Eine ähnliche Anordnung ist auch in der CA 2 135 463 A1 beschrieben.

Die Aufgabe der vorliegenden Erfindung besteht darin, ein Verfahren zur Detektion des Durchrutschens beim Greifen eines Objekts mit einem Greifer anzugeben, das eine zuverlässige Detektion des Durchrutschens mit einem Beschleunigungssensor ermöglicht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich aus der nachfolgenden Beschreibung sowie dem Ausführungsbeispiel entnehmen.

Bei dem vorgeschlagenen Verfahren zur Detektion des Durchrutschens beim Greifen eines Objekts mit einem Greifer wird wenigstens ein Beschleunigungssensor an einer Greiffläche des Greifers eingesetzt. Wenigstens ein vom Beschleunigungssensor während eines Greifprozesses geliefertes Sensorsignal wird erfasst und mit einem oder mehreren Frequenzfiltern gefiltert, um ein gefiltertes Sensorsignal in einem ersten Frequenzbereich zu erhalten. Das gefilterte Sensorsignal oder ein daraus abgeleiteter Wert wird mit einem Schwellwert verglichen, dessen Überschreitung ein Indiz für ein Durchrutschen des Objekts darstellt. Ein Durchrutschen wird je nach Ausgestaltung des Verfahrens bereits dann angenommen, wenn der Schwellwert überschritten wird, oder erst dann, wenn zusätzlich zur Überschreitung des Schwellwertes noch weitere Indizien vorliegen. Das vorgeschlagene Verfahren zeichnet sich dadurch aus, dass der Beschleunigungssensor in einen starren Grundkörper und der Grundkörper mit Hilfe eines elastischen Materials, das den Grundkörper seitlich stützt, schwingungsfähig so an der Greiffläche des Greifers in den Greifer integriert wird, dass er bei einem Durchrutschen des Objekts nur in einer zur Greiffläche parallelen Ebene in mit dem Beschleunigungssensor detektierbare Schwingungen am Greifer versetzt werden kann. Die Integration des Grundkörpers in die Greiffläche bzw. den Greifer erfolgt daher so, dass der Grundkörper lediglich in einer Ebene parallel zur Greiffläche durch das elastische Material relativ zum Greifer beweglich ist und entsprechend schwingen kann, nicht jedoch in Richtung senkrecht zu dieser Ebene. Der erste Frequenzbereich wird bei dem vorgeschlagenen Verfahren dann so gewählt, dass die Schwingungsfrequenzen von Schwingungen des Grundkörpers (in der zur Greiffläche parallelen Ebene), die bei einem Durchrutschen des Objekts auftreten, innerhalb des ersten Frequenzbereiches liegen.

Durch die Integration des Beschleunigungssensors in einen starren Grundkörper und die Lagerung dieses Grundkörpers derart, dass er lediglich mit dem Beschleunigungssensor erfassbare Schwingungen parallel zur Greiffläche, im Folgenden als x- und y-Richtung bezeichnet, ausführen kann, wird eine hohe Zuverlässigkeit und Detektionsempfindlichkeit des Durchrutschens beim Greifen eines Objekts erreicht. Das Verfahren kommt hierbei mit nur einem Beschleunigungssensor aus und lässt sich kostengünstig realisieren. Je nach Anwendung kann dieser Sensor lediglich in einer Richtung sensitiv, beispielsweise in x- oder in y-Richtung, oder auch in beiden Richtungen als 2D-Beschleunigungssensor ausgebildet sein. Es kann auch ein 3D-Beschleunigungssensor eingesetzt werden, von dem dann lediglich die beiden parallel zur Greiffläche erfassten Beschleunigungen für die Bestimmung des Durchrutschens maßgeblich sind. Der Grundkörper kann auch zwei jeweils eindimensionale Beschleunigungssensoren aufweisen, von denen dann einer in x- und der andere in y-Richtung sensitiv ist. Auch mehrere der beschriebenen Grundkörper mit integriertem Beschleunigungssensor können in einer entsprechend ausgedehnten Greiffläche integriert sein. Unter der Ebene parallel zur Greiffläche ist bei Greifflächen, die nicht über den gesamten Bereich eben verlaufen, die Parallelität zu einem lokalen Bereich bzw. einer Tangentialfläche an diesen lokalen Bereich zu verstehen, an dem der Grundkörper integriert ist. Der Grundkörper ist hierbei so in die Greiffläche bzw. den Greifer integriert, dass er seitlich durch ein elastisches Material gestützt wird, das zwischen dem Grundkörper und dem Material des Greifers eingesetzt wird, jedoch in einer Richtung senkrecht zur Ebene der Greiffläche, im Folgenden als z-Richtung bezeichnet, direkt bzw. starr mit dem Greifer gekoppelt ist. Auf diese Weise wird dem Grundkörper durch das elastische Material lediglich eine Schwingung parallel zur Ebene der Greiffläche ermöglicht. Diese Schwingungen werden mit dem Beschleunigungssensor erfasst und das Sensorsignal des Beschleunigungssensors nach einer Filterung ausgewertet, um ein Durchrutschen zu erkennen. Hierzu wird das Sensorsignal zunächst mit einem oder mehreren Frequenzfiltern gefiltert, um ein gefiltertes Sensorsignal in einem ersten Frequenzbereich zu erhalten. Dieser erste Frequenzbereich wird so gewählt, dass die beim Durchrutschen auftretenden Schwingungsfrequenzen von Schwingungen des Grundkörpers innerhalb dieses Frequenzbereiches liegen. Zu niedrige oder zu hohe Frequenzen, die durch die Bewegung des Greifers selbst oder durch hochfrequente Störungen verursacht sein können, werden dabei herausgefiltert. Die Filterung erfolgt vorzugsweise mit einem Bandpassfilter, dessen Durchlassbereich dem ersten Frequenzbereich entspricht. Vorzugsweise wird als untere Grenze dieses ersten Frequenzbereiches eine Frequenz von ≥ 50 Hz gewählt. Als obere Grenze wird vorzugsweise eine Frequenz von ≤ 400 Hz gewählt. Die Frequenzen, die beim Durchrutschen auftreten, hängen unter anderen von der Masse des Grundkörpers ab. Der erste Frequenzbereich wird daher vorzugsweise so gewählt, dass die Resonanzfrequenz des am Greifer parallel zur Greiffläche schwingenden Grundkörpers innerhalb dieses ersten Frequenzbereiches liegt. Zur Unterdrückung von Störungen wird dieser Frequenzbereich vorzugsweise auf eine Breite von ≤ 200 Hz eingestellt. Anstelle eines Bandpassfilters kann selbstverständlich auch eine Kombination mehrerer Filter, beispielsweise eines Hochpass- und eines Tiefpassfilters, zum Einsatz kommen.

Das gefilterte Sensorsignal wird beim vorgeschlagenen Verfahren ausgewertet, um ein Durchrutschen eines Objekts zu erkennen. Hierfür wird das Sensorsignal oder ein daraus abgeleiteter Wert, beispielsweise ein gleitender Mittelwert der Signalamplitude (nach Gleichrichtung), mit einem vorgegebenen Schwellwert verglichen, dessen Überschreitung ein Indiz für ein Durchrutschen eines gegriffenen Objektes ist. Dieser Schwellwert kann durch vorangehende Messungen ermittelt oder als Erfahrungswert vorgegeben werden, im Folgenden dann auch als erster Schwellwert bezeichnet. In einer möglichen Ausgestaltung kann dieser Schwellwert auch aus einem Anteil des Sensorsignals des Beschleunigungssensors ermittelt werden, der in einem Frequenzbereich oberhalb des ersten Frequenzbereiches liegt, im Folgenden dann auch als zweiter Schwellwert bezeichnet. So kann beispielsweise aus diesem Anteil des Sensorsignals, der oberhalb des ersten Frequenzbereiches liegt, nach entsprechender Gleichrichtung ein gleitender Mittelwert der Signalamplitude berechnet und das Doppelte dieses Mittelwertes als zweiter Schwellwert gewählt werden.

Je nach eingesetzten Beschleunigungssensor liefert dieser nur ein Sensorsignal, im Falle eines eindimensional messenden Beschleunigungssensors, oder bspw. zwei Sensorsignale für zwei senkrecht zueinander verlaufende Achsen (x- und y-Achse), im Falle eines zweidimensional messenden Beschleunigungssensors. In letztgenanntem Fall können dann die beiden Signale jeweils getrennt gemäß der vorgeschlagenen Verfahren ausgewertet oder - wie weiter unten noch ausgeführt - miteinander verrechnet werden, um ein einziges Sensorsignal zu erhalten und entsprechend dem vorgeschlagenen Verfahren auszuwerten.

Bei dem vorgeschlagenen Verfahren kann dann entweder bereits alleine aufgrund dieses Vergleichs mit dem Schwellwert auf ein Durchrutschen des gegriffenen Objekts geschlossen werden oder erst in Verbindung mit einem oder mehreren weiteren Kriterien. So wird in einer bevorzugten Ausgestaltung zusätzlich zum Beschleunigungssensor wenigstens ein Kraftsensor in den Greifer integriert, mit dem das Greifen eines Objekts mit dem Greifer über eine Normalkraft auf die Greiffläche erfassbar ist. Vorzugsweise wird dieser Kraftsensor unterhalb des Grundkörpers, also an der starren Koppelstelle zwischen dem Grundkörper und dem Greifer eingesetzt. Der Grundkörper überträgt dabei die beim Greifen eines Objekts auftretende Normalkraft (in z-Richtung) auf den Kraftsensor. Ein Durchrutschen eines Objekts wird in dieser Ausgestaltung nur dann angenommen, wenn das gefilterte Sensorsignal oder der daraus abgeleitete Wert den ersten und/oder zweiten Schwellwert und gleichzeitig das Sensorsignal des Kraftsensors einen Schwellwert für die Normalkraft überschreitet, der auf das Greifen eines Objekts hindeutet. Die Einbeziehung des Sensorsignals des Kraftsensors stellt dabei eine Plausibilitätsüberprüfung dar, da ein Durchrutschen eines Objekts nur dann auftreten kann, wenn tatsächlich ein Objekt gegriffen wurde.

Mit dem vorgeschlagenen Verfahren wird eine zuverlässige Bewertung des Greifvorgangs ermöglicht, insbesondere kann ein Durchrutschen (Slip) eines gegriffenen Objektes zuverlässig detektiert werden. Dies ist wichtig für Applikationen von z.B. Handprothesen oder auch in Anwendungen im Bereich von automatisierten Vorgängen, beispielsweise in der Produktion. Es kann damit in Echtzeit erkannt werden, ob das Objekt fest gegriffen wird oder ob sich das Objekt aus dem Griff löst und somit durchrutscht, also Schlupf auftritt. In diesem Fall kann dann der Greifer durch ein geeignetes Steuersignal veranlasst werden, fester zu greifen.

### Kurze Beschreibung der Zeichnungen

Im Folgenden wird das vorgeschlagene Verfahren anhand von Ausführungsbeispielen in Verbindung mit den Zeichnungen nochmals näher erläutert. Hierbei zeigen:
- Fig. 1: ein Beispiel für die Ausgestaltung und Integration eines Grundkörpers mit integriertem Beschleunigungssensor an der Greiffläche eines Greifers;
- Fig. 2: ein Ergebnis einer Beispielmessung beim Durchrutschen, wobei
a) dem Sensorsignal des Beschleunigungssensors,
b) dem Amplitudengang des Sensorsignals in Abhängigkeit von der Frequenz,
c) dem mit einem Bandpassfilter gefilterten Sensorsignal,
d) dem Amplitudengang des gefilterten Sensorsignals und
e) dem aus dem gefilterten Sensorsignal ermittelten gleitenden Mittelwert im Vergleich zu einem vorgegebenen Schwellwert entsprechen;

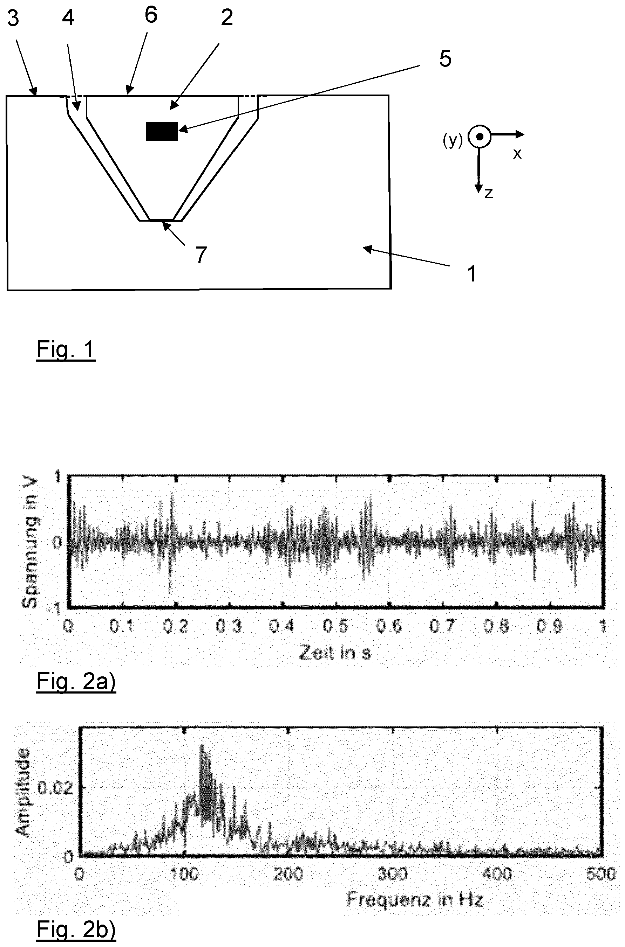

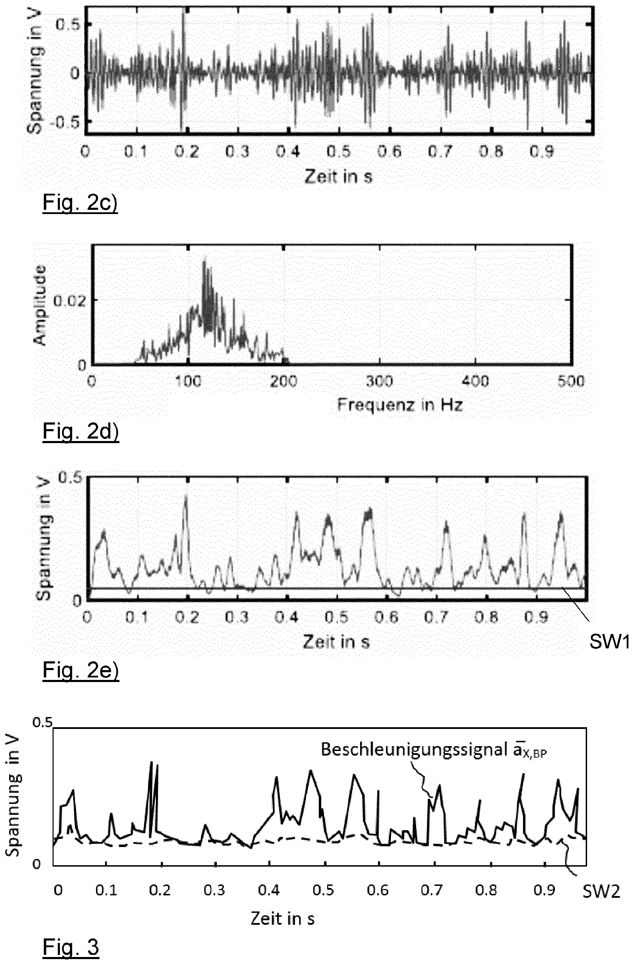

- Fig. 3: ein Beispiel für die Anwendung eines aus dem oberen Frequenzbereich ermittelten Schwellwertes bei der Beispielmessung der Fig. 2; und

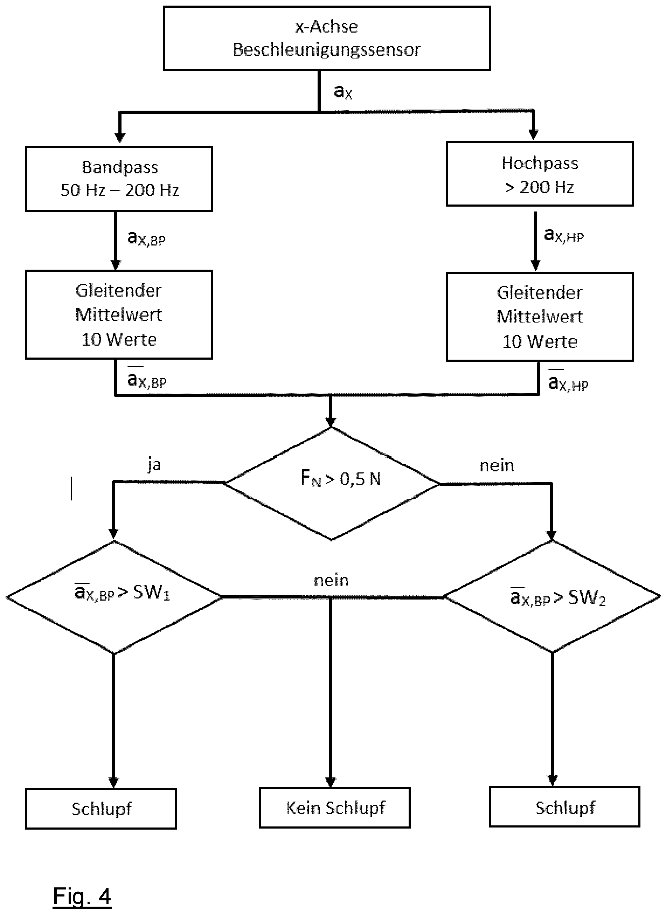

- Fig. 4: ein Ablaufdiagramm für eine beispielhafte Ausgestaltung des vorgeschlagenen Verfahrens.

### Wege zur Ausführung der Erfindung

Bei dem vorgeschlagenen Verfahren wird ein starrer Grundkörper mit einem darin angeordneten Beschleunigungssensor an der Greiffläche so in den Greifer integriert, dass der Grundkörper lediglich Schwingungen parallel zur Ebene der Greiffläche gegenüber dem Greifer durchführen kann. Fig. 1 zeigt ein Beispiel für die Integration des Grundkörpers 2 in den Greifer 1, der in diesem Beispiel lediglich teilweise dargestellt ist. Die Oberseite des Grundkörpers 2 liegt in der Ebene der Greiffläche 3 des Greifers 1. Zwischen dem Grundkörper 2 und dem Material des Greifers 1 ist eine elastische Masse 4 angeordnet, die den Grundkörper 2 seitlich stützt und eine Schwingung des Grundkörpers 2 in einer Ebene parallel zur Greiffläche 3 relativ zum Greifer 1 zulässt. Diese elastische Masse 4, beispielsweise aus Silikon-Kautschuk, kann den Grundkörper 2 seitlich formschlüssig umschließen - wie in Fig. 1 dargestellt - oder auch nur im oberen Bereich stützen. An der Unterseite des Grundkörpers 2 liegt dieser direkt am Greifer 1 an, so dass in dieser Richtung (z-Richtung in der Figur 1) keine Schwingung des Grundkörpers 2 relativ zum Greifer 1 möglich ist. In den Grundkörper 2 ist ein Beschleunigungssensor 5 integriert, mit dem Schwingungen des Grundkörpers 2 parallel zur Greiffläche 3 erfasst werden können.

Beim Greifen eines Objekts mit diesem Greifer 1 wirkt eine Normalkraft F_{N} in z-Richtung auf den Grundkörper 2, dessen Oberseite bzw. Auflagefläche 6 entweder direkt mit dem Objekt in Berührung kommen oder auch durch eine Schutzschicht abgedeckt sein kann.

In einer bevorzugten Ausgestaltung des vorgeschlagenen Verfahrens ist an der Unterseite des Grundkörpers 2 zusätzlich ein Kraftsensor 7 zwischen dem Grundkörper 2 und dem Greifer 1 angeordnet, wie dies in der Fig. 1 nur schematisch angedeutet ist. Durch diesen optionalen Kraftsensor 7 werden dann die beim Greifen auftretenden Kräfte in z-Richtung erfasst. Ein derartiger Kraftsensor kann selbstverständlich auch an anderer Stelle in den Greifer 1 integriert sein. Durch die in diesem Beispiel kegelförmige Ausgestaltung des Grundkörpers 2 wird bei einem Greifvorgang gegenüber der Auflagefläche 6 des Grundkörpers 2 ein erhöhter Druck auf den Kraftsensor 7 ausgeübt, so dass dieser sehr sensitiv auf entsprechende Greifkräfte anspricht. Mit dem Kraftsensor 7 kann festgestellt werden, ob ein Gegenstand gegriffen wird. Bei unzureichender Haftung kann es zu einem Durchrutschen des Objekts kommen, wodurch Tangentialkräfte F_{T,x} bzw. F_{T,y} in x- bzw. y-Richtung auf den Grundkörper 2 wirken. Hierbei wird der Grundkörper 2 in entsprechende Schwingungen in x- und/oder y-Richtung relativ zum Greifer 1 versetzt, die mit dem in diesem Beispiel 2D-Beschleunigungssensor 5 für x- und y-Richtung erfasst werden. Aus Fig. 2 ist ersichtlich, dass ein Durchrutschen in diesem Beispiel zu einer Schwingung (Beschleunigung) im Bereich von ca. 120 Hz führt, wobei dies vom Beschleunigungssensor 5 aufgrund der erhöhten Amplitude detektiert werden kann.

Fig. 2 zeigt hierzu das Ergebnis einer Beispielmessung beim Durchrutschen eines gegriffenen Objekts. In Teilabbildung a) ist hierbei das Sensorsignal des Beschleunigungssensors für die Schwingung in x-Richtung in Abhängigkeit von der Zeit dargestellt. Teilabbildung b) zeigt den Amplitudengang dieses Sensorsignals in Abhängigkeit von der Frequenz. Beim vorgeschlagenen Verfahren wird dieses Sensorsignal gefiltert, um lediglich Signalanteile in einem bestimmten Frequenzbereich im vorliegenden Beispiel zwischen 50 und 200 Hz, zu erhalten, in dem die durch das Durchrutschen verursachten Schwingungen des Grundkörpers 2 im Greifer 1 auftreten. Teilabbildung c) zeigt ein derart mit einem Bandpassfilter gefiltertes Sensorsignal. Teilabbildung d) zeigt den Amplitudengang dieses gefilterten Sensorsignals in Abhängigkeit von der Frequenz.

Bei dem vorgeschlagenen Verfahren wird nun ein Schwellwert vorgegeben oder bestimmt, mit dem das gefilterte Sensorsignal oder ein daraus abgeleiteter Wert verglichen wird. Dieser Schwellwert SW₁ kann aus Erfahrungswerten abgeleitet oder durch Vormessungen bestimmt werden. In einer nachfolgend noch beschriebenen vorteilhaften Ausgestaltung wird der Schwellwert, dann als SW₂ bezeichnet, aus dem Sensorsignal selbst ermittelt.

Je nach Ausgestaltung des Beschleunigungssensors liefert dieser ein Sensorsignal aₓ für eine Richtung (beispielsweise x-Richtung) oder - bei einem zweidimensionalen Beschleunigungssensor - zwei getrennte Sensorsignale aₓ, a_{y} für x- und y-Richtung. Diese Sensorsignale können dann entweder getrennt ausgewertet und jeweils mit dem Schwellwert verglichen oder weiter verarbeitet werden, um ein dem Betrag der Beschleunigung |a| = (aₓ² + a_{y}²)^{0,5} entsprechendes Signal zu erhalten und dann mit dem Schwellwert zu vergleichen.

Im vorliegenden Beispiel wird in Teilabbildung e) ein nach einer Gleichrichtung gebildeter gleitender Mittelwert des gefilterten Sensorsignals mit dem vorgegebenen Schwellwert SW₁ verglichen. Überschreitet der gleitende Mittelwert diesen Schwellwert, so wird ein Durchrutschen detektiert.

Der Schwellwert kann in einer vorteilhaften Ausgestaltung auch aus dem Sensorsignal außerhalb des für die Detektion des Durchrutschens vorgegebenen Frequenzbereiches erfolgen. Hierzu wird im Beispiel der Figur 3 ein Anteil des Sensorsignals oberhalb des für die Detektion des Durchrutschens genutzten Frequenzbereiches (50 bis 200 Hz) mit einem Hochpass herausgefiltert und ein gleitender Mittelwert dieses gefilterten Sensorsignals berechnet. Als Schwellwert SW₂ wird dann im vorliegenden Beispiel das Doppelte dieses gleitenden Mittelwertes herangezogen und mit dem gleitenden Mittelwert des im Frequenzbereich von 50 bis 200 Hz gefilterten Sensorsignals verglichen. In der Messung der Figur 3 sind der gleitende Mittelwert des zur Detektion des Durchrutschens gefilterten Sensorsignals und der entsprechende Verlauf des Schwellwertes SW₂ zu erkennen. Auch hier wird ein Durchrutschen dann angenommen, wenn der Schwellwert SW₂ überschritten wurde. Auch eine Kombination dieses zeitlich variierenden Schwellwertes SW₂ mit einem fest vorgegebenen Schwellwert SW₁ wie bei Figur 2 kann zum Einsatz kommen, wobei dann beide Schwellwerte jeweils überschritten werden müssen, um ein Durchrutschen zu detektieren. Diese Nutzung zweier Schwellwerte kann zur Plausibilisierung und weiteren Verbesserung der Zuverlässigkeit genutzt werden.

Eine weitere Erhöhung der Zuverlässigkeit kann dadurch erreicht werden, dass zusätzlich mit einem Kraftsensor die Normalkraft F_{N} auf die Greiffläche 3 bzw. den Grundkörper 2 gemessen wird. Hierzu wird wiederum ein Schwellwert SW_{FN} vorgegeben, oberhalb dessen das Greifen eines Objekts mit dem Greifer 1 aufgrund der auftretenden Kräfte angenommen werden kann. Ein Durchrutschen wird später bei Überschreiten der Schwelle durch das vom Beschleunigungssensor erhaltene Signal nur dann angenommen, wenn gleichzeitig die Schwelle für das Signal des Kraftsensors überschritten wurde. Dies dient wiederum lediglich zur Plausibilisierng der Detektion. Statt mit einem Kraftsensor kann die Normalkraft F_{N} auch nach Newton (F_{N} = m·a_{z}) aus dem Beschleunigungssignal für a_{z} (Beschleunigung in z-Richtung) eines 3D-Beschleunigungssensors ermittelt werden.

In einer weiteren Ausgestaltung des vorgeschlagenen Verfahrens können die Schwellwerte für das gefilterte Sensorsignal zum Erkennen des Durchrutschens auch in Abhängigkeit von der mit dem Kraftsensor detektierten Haltekraft gewählt werden. Beim Greifen größerer Objekte und der damit verbundenen größeren Haltekraft kann ein fester Schwellwert SW₁ gewählt werden. Beim Greifen von leichteren und/oder empfindlichen Objekten ist die Haltekraft geringer und auch die Amplitude des gefilterten Beschleunigungssignals beim Durchrutschen entsprechend kleiner. In diesem Fall wird dann vorzugsweise der sich verändernde Schwellwert SW₂ auf Basis des gleitenden Mittelwerts des Anteils des Sensorsignals gewählt, der nur Frequenzanteile oberhalb des für die Detektion des Durchrutschens gewählten Frequenzbereiches enthält, um aufgrund des kleineren Signals sicher zu gehen, dass keine Störungen als Schlupf identifiziert werden. Als Wert für die Unterscheidung der beiden Situationen kann beispielsweise eine Normalkraft F_{N} von 0,5 N gewählt werden. Wird mit dem Kraftsensor eine Haltekraft F_{N} von > 0,5 N detektiert, so wird der obige feste Schwellwert SW₁ genutzt. Wird eine kleinere Haltekraft F_{N} detektiert, so kommt der variierende Schwellwert SW₂ zum Einsatz. Diese Vorgehensweise ist anhand der Figur 4 in einem Flussdiagramm nochmals als Übersicht dargestellt.

Die Weiterverarbeitung, insbesondere Filterung, und Auswertung der Sensorsignale kann bei dem vorgeschlagenen Verfahren in einfacher Weise mit Hilfe eines Mikrocontrollers ausreichend schnell durchgeführt werden.

Bei Nutzung eines dreidimensionalen Beschleunigungssensors im Grundkörper kann das Sensorsignal auch zusätzlich für die Bewertung der Bewegung des Greifers verwendet werden, da die hierbei auftretenden Frequenzen des Beschleunigungssignales in der Regel außerhalb des für das Gleiten spezifischen Bereichs liegen.

Die bei dem vorgeschlagenen Verfahren erfassten Signale können auch zusätzlich genutzt werden, um die minimale Masse des zu gegriffenen Objekts zu bestimmen, beispielsweise mittels der Haltekraft und der Richtung der Erdbeschleunigung.

### Bezugszeichenliste

- 1: Greifer
- 2: Grundkörper
- 3: Greiffläche
- 4: elastische Masse
- 5: Beschleunigungssensor
- 6: Auflagefläche
- 7: Kraftsensor

## Patentansprüche

1. Verfahren zur Detektion eines Durchrutschens beim Greifen eines Objekts mit einem Greifer, bei dem
- der Greifer (1) mit wenigstens einem Beschleunigungssensor (5) an einer Greiffläche (3) des Greifers (1) bereitgestellt wird, wobei der Beschleunigungssensor (5) in einen starren Grundkörper (2) und der Grundkörper (2) mit Hilfe eines elastischen Materials (4), das den Grundkörper (2) seitlich stützt, schwingungsfähig so an der Greiffläche (3) des Greifers (1) integriert ist, dass er bei einem Durchrutschen des Objekts nur in einer zur Greiffläche (3) parallelen Ebene in Schwingungen am Greifer (1) versetzt werden kann,
- wenigstens ein Sensorsignal des Beschleunigungssensors (5) während eines Greifprozesses erfasst und mit einem oder mehreren Frequenzfiltern gefiltert wird, um ein gefiltertes Sensorsignal in einem ersten Frequenzbereich zu erhalten, und
- das gefilterte Sensorsignal oder ein daraus abgeleiteter Wert mit einem Schwellwert (SW₁, SW₂) verglichen wird, dessen Überschreitung ein Indiz für ein Durchrutschen des Objekts darstellt, wobei der erste Frequenzbereich so gewählt wird, dass Schwingungsfrequenzen von Schwingungen des Grundkörpers (2), die bei einem Durchrutschen des Objekts auftreten, innerhalb des ersten Frequenzbereiches liegen.

2. Verfahren nach Anspruch 1,
**dadurch gekennzeichnet,**
**dass** die Filterung des Sensorsignals mit einem Bandpassfilter erfolgt, dessen Durchlassbereich dem ersten Frequenzbereich entspricht.

3. Verfahren nach Anspruch 1 oder 2,
**dadurch gekennzeichnet,**
**dass** eine untere Grenze für den ersten Frequenzbereich bei ≥ 50 Hz gewählt wird.

4. Verfahren nach Anspruch 3,
**dadurch gekennzeichnet,**
**dass** die untere und eine obere Grenze für den ersten Frequenzbereich so gewählt werden, dass eine Resonanzfrequenz des Grundkörpers (2) innerhalb des ersten Frequenzbereiches liegt.

5. Verfahren nach Anspruch 3 oder 4,
**dadurch gekennzeichnet,**
**dass** der erste Frequenzbereich so gewählt wird, dass er eine Breite von ≤ 200 Hz aufweist.

6. Verfahren nach einem der Ansprüche 3 bis 5,
**dadurch gekennzeichnet,**
**dass** eine obere Grenze für den ersten Frequenzbereich bei ≤ 400 Hz gewählt wird

7. Verfahren nach einem der Ansprüche 1 bis 6,
**dadurch gekennzeichnet,**
**dass** der Schwellwert (SW₂) aus einem Anteil des Sensorsignals des Beschleunigungssensors (5) ermittelt wird, der in einem Frequenzbereich oberhalb des ersten Frequenzbereiches liegt.

8. Verfahren nach Anspruch 7,
**dadurch gekennzeichnet,**
**dass** aus dem Anteil des Sensorsignals des Beschleunigungssensors (5), der in dem Frequenzbereich oberhalb des ersten Frequenzbereiches liegt, ein gleitender Mittelwert berechnet und wenigstens das Doppelte dieses Mittelwertes als Schwellwert (SW₂) gewählt wird.

9. Verfahren nach einem der Ansprüche 1 bis 8,
**dadurch gekennzeichnet,**
**dass** ein gleitender Mittelwert des gefilterten Sensorsignals mit dem Schwellwert (SW₁, SW₂) verglichen wird.

10. Verfahren nach einem der Ansprüche 1 bis 9,
**dadurch gekennzeichnet,**
**dass** der Greifer (1) mit zusätzlich wenigstens einem in den Greifer (1) integrierten Kraftsensor (7) bereitgestellt wird, mit dem ein Greifen eines Objekts mit dem Greifer (1) über eine Normalkraft auf die Greiffläche (3) erfassbar ist.

11. Verfahren nach Anspruch 10,
**dadurch gekennzeichnet,**
**dass** der Kraftsensor (7) so mechanisch mit dem Grundkörper (2) gekoppelt wird, dass die Normalkraft über den Grundkörper (2) auf den Kraftsensor (7) übertragen wird.

12. Verfahren nach einem der Ansprüche 1 bis 9,
**dadurch gekennzeichnet,**
**dass** der Greifer (1) mit einem dreidimensional messenden Beschleunigungssensor als Beschleunigungssensor (5) bereitgestellt wird, aus dessen Sensorsignalen auch eine auf die Greiffläche (3) wirkende Normalkraft berechnet wird.

13. Verfahren nach einem der Ansprüche 10 bis 12,
**dadurch gekennzeichnet,**
**dass** ein Durchrutschen nur dann angenommen wird, wenn sowohl der Schwellwert (SW₁, SW₂) für das gefilterte Signal des Beschleunigungssensors (5) überschritten wird als auch die mit dem Kraftsensor (7) gemessene oder aus Sensorsignalen des Beschleunigungssensors (5) berechnete Normalkraft über einem vorgebbaren Schwellwert (SW_{FN}) für die Normalkraft liegt.

14. Verfahren nach einem der Ansprüche 10 bis 13,
**dadurch gekennzeichnet,**
**dass** bei einer Normalkraft, die unterhalb eines vorgebbaren Wertes liegt, ein anderer Schwellwert (SW₁, SW₂) für das gefilterte Signal des Beschleunigungssensors (5) verwendet wird als bei einer Normalkraft, die oberhalb des vorgebbaren Wertes liegt.

## Claims

1. A method for detecting slippage when gripping an object with a gripper, in which
- the gripper (1) is provided with at least one acceleration sensor (5) on a gripping surface (3) of the gripper (1), wherein the acceleration sensor (5) is integrated in a rigid main body (2) and the main body (2), with the aid of an elastic material (4) which supports the main body (2) laterally, is integrated in the gripper (1) so as to be capable of oscillation on the gripping surface (3) such that, in the event of slippage of the object, said main body can be set in oscillation on the gripper (1) only in a plane parallel to the gripping surface (3),
- at least one sensor signal of the acceleration sensor (5) is captured during a gripping process and filtered with one or more frequency filters in order to obtain a filtered sensor signal in a first frequency range, and
- the filtered sensor signal or a value derived therefrom is compared with a threshold value (SW₁, SW₂) which, when exceeded, constitutes an indication of slippage of the object,
wherein the first frequency range is selected such that oscillation frequencies of oscillations of the main body (2) which occur during slippage of the object, lie within the first frequency range.

2. The method according to claim 1,
**characterized in**
**that** filtering the sensor signal is carried out with a bandpass filter, the passband of which corresponds to the first frequency range.

3. The method according to claim 1 or 2,
**characterized in**
**that** a lower limit for the first frequency range is selected at ≥ 50 Hz.

4. The method according to claim 3,
**characterized in**
**that** the lower and an upper limit for the first frequency range are selected such that a resonant frequency of the main body (2) lies within the first frequency range.

5. The method according to claim 3 or 4,
**characterized in**
**that** the first frequency range is selected such that it has a width of ≤ 200 Hz.

6. The method according to any one of claims 3 to 5,
**characterized in**
**that** an upper limit for the first frequency range is selected at ≤ 400 Hz.

7. The method according to any one of claims 1 to 6,
**characterized in**
**that** the threshold value (SW₂) is determined from a portion of the sensor signal of the acceleration sensor (5) which lies in a frequency range above the first frequency range.

8. The method according to claim 7,
**characterized in**
**that** from the portion of the sensor signal of the acceleration sensor (5) which lies in the frequency range above the first frequency range, a moving average value is calculated and at least twice this average value is selected as the threshold value (SW₂).

9. The method according to any one of claims 1 to 8, **characterized in**
**that** a moving average value of the filtered sensor signal is compared with the threshold value (SW₁, SW₂) .

10. The method according to any one of claims 1 to 9, **characterized in,**
**that** the gripper (1) is additionally provided with at least one force sensor (7) which is integrated in the gripper (1) and with which gripping of an object with the gripper (1) can be detected via a normal force on the gripping surface (3).

11. The method according to claim 10,
**characterized in**
**that** the force sensor (7) is mechanically coupled to the main body (2) in such a manner that the normal force is transmitted to the force sensor (7) via the main body (2).

12. The method according to any one of claims 1 to 9, **characterized in**
**that** the gripper (1) is provided with a threedimensionally measuring acceleration sensor as an acceleration sensor (5) from the sensor signals of which a normal force acting on the gripping surface (3) is also calculated.

13. The method according to any one of claims 10 to 12,
**characterized in**
**that** slippage is assumed only if both the threshold value (SW₁, SW₂) for the filtered signal of the acceleration sensor (5) is exceeded and the normal force measured with the force sensor (7) or calculated from sensor signals of the acceleration sensor (5) is above a predeterminable threshold value (SW_{FN}) for the normal force.

14. The method according to any one of claims 10 to 13,
**characterized in**
**that** in the case of a normal force which lies below a predeterminable value, a different threshold value (SW₁, SW₂) is used for the filtered signal of the acceleration sensor (5) than in the case of a normal force which lies above the predeterminable value.

## Revendications

1. Procédé de détection d'un glissement lors d'un pincement d'un objet avec une pince, pour lequel
- la pince (1) est préparée avec au moins un capteur d'accélération (5) sur une surface de pincement (3) de la pince (1), sachant que le capteur d'accélération (5) dans un corps de base rigide (2) et le corps de base (2) à l'aide d'un matériau élastique (4), qui soutient latéralement le corps de base (2), est intégré pouvant osciller sur la surface de pincement (3) de la pince (1) de telle manière qu'elle peut être déportée par des vibrations sur la pince (1) lors d'un glissement de l'objet uniquement dans un plan parallèle à la surface de pincement (3),
- au moins un signal de détection du capteur d'accélération (5) est saisi pendant un processus de pincement et est filtré avec un ou plusieurs filtres de fréquence pour recevoir un signal de détection filtré dans une première gamme de fréquences, et
- le signal de détection filtré ou une valeur dérivée de celui-ci est comparé à une valeur seuil (SW₁, SW₂), dont le dépassement représente un indice pour un glissement de l'objet, sachant que la première gamme de fréquences est choisie de telle manière que les fréquences de vibration des vibrations du corps de base (2), qui se produisent lors d'un glissement de l'objet, se situent à l'intérieur de la première gamme de fréquences.

2. Procédé selon la revendication 1,
**caractérisé en ce que**
le filtrage du signal de détection a lieu avec un filtre passe-bande, dont la plage de passage correspond à la première gamme de fréquences.

3. Procédé selon la revendication 1 ou 2,
**caractérisé en ce qu'**
une limite inférieure est choisie à ≥ 50 Hz pour la première gamme de fréquences.

4. Procédé selon la revendication 3,
**caractérisé en ce que**
la limite inférieure et une limite supérieure pour la première gamme de fréquences sont choisies de telle manière qu'une fréquence de résonance du corps de base (2) se situe à l'intérieur de la première gamme de fréquences.

5. Procédé selon la revendication 3 ou 4,
**caractérisé en ce que**
la première gamme de fréquences est choisie de telle manière qu'elle comporte une largeur ≤ 200 Hz.

6. Procédé selon l'une quelconque des revendications 3 à 5, **caractérisé en ce qu'**
une limite supérieure pour la première gamme de fréquences est choisie à ≤ 400 Hz.

7. Procédé selon l'une quelconque des revendications 1 à 6, **caractérisé en ce que**
la valeur seuil (SW₂) est déterminée à partir d'une partie du signal de détection du capteur d'accélération (5), qui se situe dans une gamme de fréquences au-dessus de la première gamme de fréquences.

8. Procédé selon la revendication 7,
**caractérisé en ce qu'**
une moyenne mobile est calculée et au moins le double de cette moyenne est choisi comme valeur seuil (SW₂) à partir de la partie du signal de détection du capteur d'accélération (5), qui se situe dans la gamme de fréquences au-dessus de la première gamme de fréquences.

9. Procédé selon l'une quelconque des revendications 1 à 8, **caractérisé en ce qu'**
une moyenne mobile du signal de détection filtré est comparée à la valeur seuil (SW₁, SW₂) .

10. Procédé selon l'une quelconque des revendications 1 à 9, **caractérisé en ce que**
la pince (1) est préparée avec en plus au moins un capteur de force (7) intégré dans la pince (1) avec lequel un pincement d'un objet avec la pince (1) peut être saisi par une force normale sur la surface de pincement (3).

11. Procédé selon la revendication 10,
**caractérisé en ce que**
le capteur de force (7) est couplé mécaniquement au corps de base (2) de telle sorte que la force normale est transmise par le corps de base (2) au capteur de force (7).

12. Procédé selon l'une quelconque des revendications 1 à 9, **caractérisé en ce que**
la pince (1) est préparée avec un capteur d'accélération mesurant de façon tridimensionnelle en tant que capteur d'accélération (5) à partir des signaux de détection duquel est également calculée une force normale agissant sur la surface de pincement (3).

13. Procédé selon l'une quelconque des revendications 10 à 12,
**caractérisé en ce qu'**
un glissement n'est ensuite admis, tant lorsque la valeur seuil (SW₁, SW₂) pour le signal filtré du capteur d'accélération (5) est dépassée, que lorsque la force normale mesurée avec le capteur de force (7) ou calculée à partir des signaux de détection du capteur d'accélération (5) se situe au-dessus d'une valeur seuil prévisible (SW_{FN}) pour la force normale.

14. Procédé selon l'une quelconque des revendications 10 à 13, **caractérisé en ce qu'**
à une force normale, qui se situe en dessous d'une valeur prévisible, une valeur seuil (SW₁, SW₂) pour le signal filtré du capteur d'accélération (5) est utilisée autre que pour une force normale, qui se situe au-dessus de la valeur prévisible.
